# EUROPEAN PATENT SPECIFICATION

(11) **EP 3 381 305 B1**
(45) Date of publication and mention of the grant of the patent: **27.04.2022**
(21) Application number: 18163952.7
(22) Date of filing: 26.03.2018
(51) Int. Cl.: A24F 47/00, H02J 7/00

(54) **CASE AND BATTERY ASSEMBLY OF ELECTRONIC CIGARETTE, AND ELECTRONIC CIGARETTE**
GEHÄUSE UND BATTERIEANORDNUNG EINER ELEKTRONISCHEN ZIGARETTE UND ELEKTRONISCHE ZIGARETTE
BOÎTIER ET ENSEMBLE BATTERIE DE CIGARETTE ÉLECTRONIQUE ET CIGARETTE ÉLECTRONIQUE

(30) Priority: 27.03.2017 CN 201720306752 U
(43) Date of publication of application: 03.10.2018
(73) Proprietor: Shenzhen IVPS Technology Co., Ltd., 518000 Shenzhen Guangdong (CN)
(72) Inventor: CHEN, Wen, Shenzhen, Guangdong 518000 (CN)
(74) Representative: IP-PAL Patent & Trademark Attorneys GmbH

(56) References cited:
- WO-A1-2016/165063
- US-A1- 2013 248 385
- US-A1- 2015 164 138

## Description

### TECHNICAL FIELD

The present disclosure relates to electronic cigarettes, in particular to a case, and a battery assembly and an electronic cigarette having the case.

### BACKGROUND

Electronic cigarettes are also known as virtual cigarettes, or E-atomizers. The electronic cigarette is a heat-not-burn product. The electronic cigarette is provided with efficacies similar to those of the ordinary cigarette. Electronic cigarette can refresh the smokers and satisfy their smoking addiction, making them happy and relaxed. Nowadays, the electronic cigarette has a battery detachably received in a case body, and a cover detachably mounted to the case for covering the battery. In detail, one side of the cover is pivoted to the case body, and the other side is fastened to the case body. However, the cover can't be retained in a certain position and will wobble easily while the case body is released. US2013248385 (A1) relates to a container for storing the electronic cigarette. US2015164138 (A1) relates to an electronic cigarette box and a support accommodated in a box body of the electronic cigarette box. WO2016165063 (A1) relates to an electronic cigarette case comprising a case body and a cover body movably connected to the case body.

Therefore, there is room for improvement in the art.

### SUMMARY

The present disclosure relates to a case, a battery assembly and an electronic cigarette having the case according to claims 1, 8, and 9, respectively. Further improvements are recited in the other claims.

### BRIEF DESCRIPTION OF THE DRAWINGS

For a better understanding of the embodiments of the present disclosure or the technical scheme in the prior art, accompanying drawings needed in the description of the embodiments or the prior art are simply illustrated below.
FIG.1 is an exploded perspective view of a case in accordance to an embodiment.
FIG. 2 is a cross-sectional view of a case when having been assembled in accordance to an embodiment.
FIG. 3 is an exploded perspective view of a bottom of the case in accordance to an embodiment.
FIG. 4 is a cross-sectional view of an elastic assembly in accordance to an embodiment.

### DETAILED DESCRIPTION

A clear and complete description as below is provided for the technical scheme in the embodiments of the present disclosure in conjunction with the drawings in the embodiments of the present disclosure.

The present disclosure relates to a case for a battery assembly and an electronic cigarette, aiming to solve the problem of wobble in structure in related art.

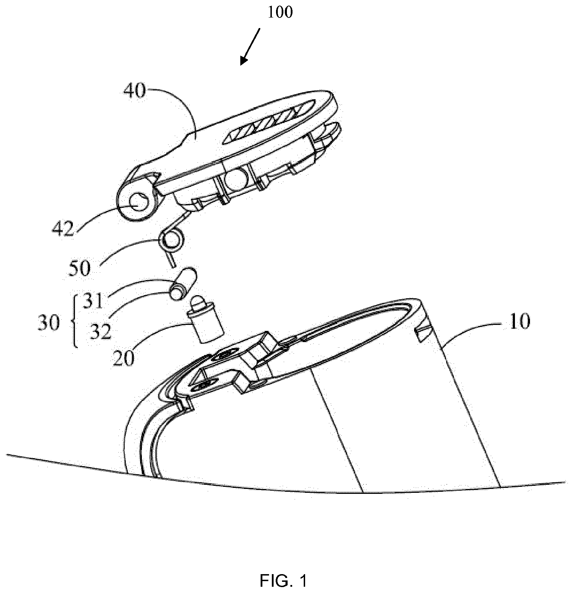

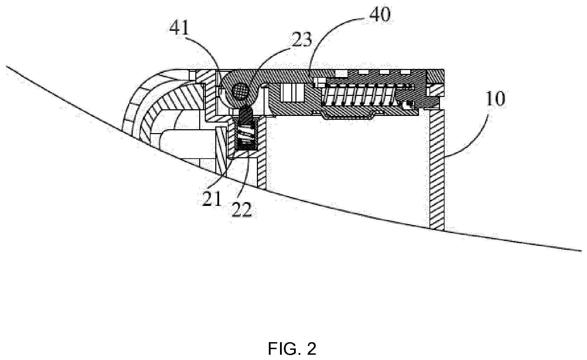

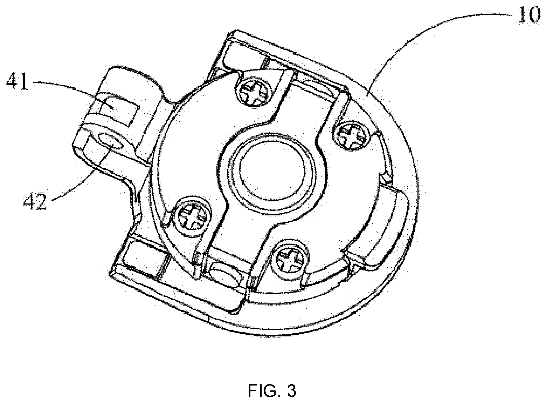

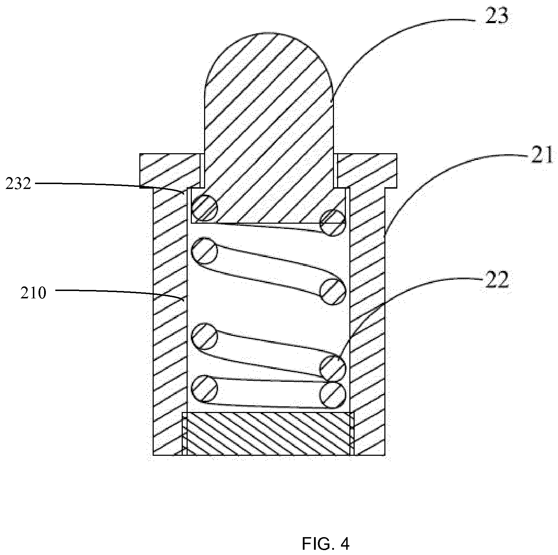

Referring to FIGs. 1-4, in one exemplary embodiment, a case 100 includes a main body 10, an elastic assembly 20 fixed on the main body 10, a cover 40 pivoted to the main body 10 via a pivot 30.

An end of the cover 40 pivoted to the main body 10 defines a groove 41. The elastic assembly 20 is arranged in alignment with the groove 41, and the elastic assembly 20 is inserted into the groove 41 and supports the cover 40 in a certain position when the cover 40 is opened. The elastic assembly 20 is stretchable. The other end of the cover 40, away from the end pivoted to the main body 10, is fastened to the main body 10 via a fasten mechanism (not labeled). When the end of the cover 40 fastened to the main body 10 is released, the cover 40 can rotate with respective with the pivot 30, the top portion of the elastic assembly 20 is inserted into the groove 41 and supports on the certain position of the cover 40. It is to be understood that, during rotation of the cover 30, the elastic assembly 20 abuts against the certain position of the cover 40 corresponding to the groove 41 and the elastic assembly 20 is stretched to pull on the cover 40, and the cover 40 is thus prevented from wobbling and generating noise.

The elastic assembly 20 includes a housing 21, an elastic element 22 and an elastic rod 23 located into a receiving room 210 formed in the housing 21. The elastic element 22 is fixed in the housing 21. The elastic element 22 may be, for example, a spring, or an elastic strip, an elastic gasket. The elastic rod 23 is secured on the elastic elements 22. The elastic rod 22 has a top portion 220 protruding out of the top of housing 21 from an opening 212 to support on the certain position corresponding to the groove 41. The opening 212 is defined in the housing 21 and communicates with the receiving room 210. It is to be understood that, during the rotation of the cover 40, the elastic rod 23 is pressed to deform by the cover 40, and generates an elastic force exerted to the cover 40, so that the cover 40 is stabilized opened. Further, a blocking member 232 is located on the elastic rod 22, the blocking member 232 is configured to prevent the elastic rod 22 from dropping off from the housing 21. The blocking member 232 may be, for example, a ring board or a square board or a rectangle board. If desired, the blocking member 232 is integrally formed in the elastic rod 23 to simplify the elastic assembly 20 structure, and be easily assembled. Furthermore, the top portion 220 may have a spherical surface to make the cover 40 rotate smoothly. The elastic rod 23 may be but not limited to a rubber.

The main body 10 is concaved to form a recess (not labeled), a sidewalls (not labeled) of the recess, and two opposite pivot holes (not labeled) on the sidewall for communicating with the recess. The cover 40 extends a protrusion (not labeled) in accordance with the recess. The protrusion defines a rotating hole 42 through the protrusion and allowing the pivot 30 to pass through. The pivot 30 includes a base portion 31, and two limiting portions 32 respectively placed at two opposite sides of the base portion 31. The limiting portions 32 can be elastically deformed. The elastic assembly 20 further includes a torsion spring 50 sleeved on the pivot 30.

When assembled, first, the pivot 30 and the torsion spring 50 are assembled to the cover 40, in detail, the pivot 30 is inserted into the rotating hole 42 and then the torsion spring 50 is sleeved on the pivot 30, that the base portion 31 is placed in the rotating hole 42, and the two limiting portions 32 expose out of the protrusion. Second, the cover 40 together with the pivot 30 and torsion spring 50 are assembled to the main body 10. In detail, the cover 40 together with the pivot 30 and torsion spring 50 are positioned above the main body 10 that the protrusion is in alignment with the recess, and then the cover 40 is moved to the main body 10 gradually to make the protrusion gradually insert into the recess and the limiting portions 32 are pressed to deform. When the limiting portions 32 move to the rotating hole 42, the limiting portions 32 are correspondingly extended into the pivot holes to mount the cover 40 to the main body 10. And one end of torsion spring 50 is perpendicularly contacted to the sidewall of the recess; the other end of the torsion spring 50 is parallel contacted to the sidewall of the groove 41. Third, the elastic assembly 40 is placed into the main body 10 with the top portion 220 extending out of the main body 10 to be in alignment with the groove 41. Thus, the assembly of the case 100 is finished.

When the cover 40 is closed, the cover 40 is rotated to enable the end of the cover 40 away from the pivot 30 to close on the main body 10 via the fasten mechanism. At this time, the torsion spring 50 deforms because of twisting. It is to be understood that nearer the cover 40 is rotated to the main body 10, the stronger force is exerted to the cover 40 by the torsion spring 50.

When the cover 40 is opened, the cover 40 is released from the main body 10, the cover 40 is stably and rapidly rotated to a desired position because of elastic assembly 20. In detail, the torsion spring 50 enables the cover 40 to rotate rapidly, the elastic element 22 and elastic rod 23 enables the cover 40 to retain stabilization.

The present disclosure also provides a battery assembly (not shown), the battery assembly includes the case 100 described above and a battery received in the case 100. Furthermore, the present disclosure also provides an electronic cigarette (not shown). The electronic cigarette includes the case 100 described above and an atomizer coupled to the case 100 described above. Accordingly, the cover 40 of the battery assembly or the electronic cigarette can be retained stabilization.

## Claims

1. A case (21), comprising:
a main body (10);
a cover (40) rotatably mounted to the main body (10) at one end of the cover (40) adjacent to the main body (10), said one end defining a groove (41) at a certain portion of the cover (40); and
an elastic assembly (20) received in the main body (10), the elastic assembly (20) being arranged in alignment with the groove (41), the elastic assembly (20) being stretchable and having a top portion corresponding to the groove (41), and the top portion being configured to insert into the groove (41) so that during rotation of the cover (40) the top portion elastically abuts against the certain portion of the cover (40) corresponding to the groove (41) and the elastic assembly (20) is stretched to pull on the cover.

2. The case (21) according to claim 1, wherein the elastic assembly (20) comprises:
a housing; and
an elastic rod (23) fixed in the housing, the elastic rod (23) being provided with the top portion, the top portion extending out of the housing.

3. The case (21) according to claim 2, wherein the elastic assembly (20) further comprises an elastic element (22) received in the housing, the elastic rod (23) is secured to the elastic element (22).

4. The case (21) according to claim 3, wherein the elastic assembly (20) further comprises a blocking member (32) at an end of the elastic rod (23) adjacent to the elastic member, the blocking member (32) is configured to limit the elastic rod (23) within the housing.

5. The case (21) according to claim 1, wherein the elastic rod (23) and the blocking member (32) are integrally molded.

6. The case (21) according to claim 1, wherein the top portion has a spherical surface.

7. The case (21) according to claim 1, wherein the other end of the cover (40) is selectively fastened to the main body (10) or released from the main body (10).

8. A battery assembly, comprising:
a battery, and
a case (21) according to any of claims 1-7, the casing being configured for receiving the battery.

9. An electronic cigarette, comprising:
a case (21) according to any of claims 1-7; and
an atomizer coupled to the case (21).

10. The electronic cigarette according to claim 9, wherein the elastic assembly (20) comprises:
a housing; and
an elastic rod (23) fixed in the housing, the elastic rod (23) being provided with the top portion, the top portion extending out of the housing.

11. The electronic cigarette according to claim 10, wherein the elastic assembly (20) further comprises an elastic element (22) received in the housing, the elastic rod (23) is secured to the elastic element (22).

12. The electronic cigarette according to claim 11, wherein the elastic assembly (20) further comprises a blocking member (32) at an end of the elastic rod (23) adjacent to the elastic member, the elastic rod (23) is configured to limit the elastic rod (23) within the housing.

13. The electronic cigarette according to claim 12, wherein the elastic rod (23) and the blocking member (32) are integrally molded.

14. The electronic cigarette according to claim 9, wherein the top portion has a spherical surface.

15. The electronic cigarette according to claim 9, wherein the other end of the cover (40) is selectively fastened to the main body (10) or released from the main body (10).

## Patentansprüche

1. Gehäuse (21), umfassend:
einen Hauptkörper (10);
eine Abdeckung (40), die drehbar an dem Hauptkörper (10) an einem Ende der Abdeckung (40) angrenzend an den Hauptkörper (10) angebracht ist, wobei das eine Ende eine Nut (41) an einem bestimmten Abschnitt der Abdeckung (40) definiert; und
eine elastische Baugruppe (20), die in dem Hauptkörper (10) aufgenommen ist, wobei die elastische Baugruppe (20) in Ausrichtung mit der Nut (41) angeordnet ist, wobei die elastische Baugruppe (20) dehnbar ist und einen oberen Abschnitt aufweist, der der Nut (41) entspricht, und wobei der obere Abschnitt so konfiguriert ist, dass er in die Nut (41) eingesetzt wird, so dass während der Drehung der Abdeckung (40) der obere Abschnitt elastisch gegen den bestimmten Abschnitt der Abdeckung (40), der der Nut (41) entspricht, anstößt und die elastische Baugruppe (20) gedehnt wird, um an der Abdeckung zu ziehen:

2. Gehäuse (21) nach Anspruch 1, wobei die elastische Baugruppe (20) umfasst:
ein Gehäuse; und
eine elastische Stange (23), die in dem Gehäuse befestigt ist, wobei die elastische Stange (23) mit dem oberen Abschnitt versehen ist und sich der obere Abschnitt aus dem Gehäuse heraus erstreckt.

3. Gehäuse (21) nach Anspruch 2, wobei die elastische Anordnung (20) ferner ein elastisches Element (22) umfasst, das in dem Gehäuse aufgenommen ist, und die elastische Stange (23) an dem elastischen Element (22) befestigt ist.

4. Gehäuse (21) nach Anspruch 3, wobei die elastische Anordnung (20) ferner ein Sperrelement (32) an einem Ende der elastischen Stange (23) angrenzend an das elastische Element umfasst, wobei das Sperrelement (32) so konfiguriert ist, dass es die elastische Stange (23) innerhalb des Gehäuses begrenzt.

5. Gehäuse (21) nach Anspruch 1, wobei die elastische Stange (23) und das Sperrelement (32) einstückig geformt sind.

6. Gehäuse (21) nach Anspruch 1, wobei der obere Teil eine kugelförmige Oberfläche aufweist.

7. Gehäuse (21) nach Anspruch 1, wobei das andere Ende des Deckels (40) wahlweise am Hauptkörper (10) befestigt oder vom Hauptkörper (10) gelöst ist.

8. Batterieanordnung, die Folgendes umfasst:
eine Batterie, und
ein Gehäuse (21) nach einem der Ansprüche 1-7, wobei das Gehäuse zur Aufnahme der Batterie konfiguriert ist.

9. Elektronische Zigarette, umfassend:
ein Gehäuse (21) nach einem der Ansprüche 1-7; und
einen Zerstäuber, der mit dem Gehäuse (21) verbunden ist.

10. Elektronische Zigarette nach Anspruch 9, wobei die elastische Anordnung (20) Folgendes umfasst:
ein Gehäuse; und
eine elastische Stange (23), die in dem Gehäuse befestigt ist, wobei die elastische Stange (23) mit dem oberen Abschnitt versehen ist und sich der obere Abschnitt aus dem Gehäuse heraus erstreckt.

11. Elektronische Zigarette nach Anspruch 10, wobei die elastische Anordnung (20) ferner ein elastisches Element (22) umfasst, das in dem Gehäuse aufgenommen ist, wobei der elastische Stab (23) an dem elastischen Element (22) befestigt ist.

12. Elektronische Zigarette nach Anspruch 11, wobei die elastische Anordnung (20) ferner ein Sperrelement (32) an einem Ende der elastischen Stange (23) angrenzend an das elastische Element umfasst, wobei die elastische Stange (23) so konfiguriert ist, dass sie die elastische Stange (23) innerhalb des Gehäuses begrenzt.

13. Elektronische Zigarette nach Anspruch 12, bei der die elastische Stange (23) und das Sperrelement (32) einstückig gegossen sind.

14. Elektronische Zigarette nach Anspruch 9, wobei der obere Teil eine kugelförmige Oberfläche aufweist.

15. Elektronische Zigarette nach Anspruch 9, wobei das andere Ende der Abdeckung (40) wahlweise am Hauptkörper (10) befestigt oder vom Hauptkörper (10) gelöst ist.

## Revendications

1. Un boîtier (21), comprenant :
un corps principal (10) ;
un couvercle (40) monté de manière rotative sur le corps principal (10) à une extrémité du couvercle (40) adjacente au corps principal (10), ladite une extrémité définissant une rainure (41) au niveau d'une certaine partie du couvercle (40) ; et
un ensemble élastique (20) reçu dans le corps principal (10), l'ensemble élastique (20) étant disposé en alignement avec la rainure (41), l'ensemble élastique (20) étant étirable et ayant une partie supérieure correspondant à la rainure (41), et la partie supérieure étant configurée pour s'insérer dans la rainure (41) de sorte que pendant la rotation du couvercle (40), la partie supérieure bute élastiquement contre la certaine partie du couvercle (40) correspondant à la rainure (41) et l'ensemble élastique (20) est étiré pour tirer sur le couvercle.

2. Boîtier (21) selon la revendication 1, dans lequel l'ensemble élastique (20) comprend :
un logement ; et
une tige élastique (23) fixée dans le logement, la tige élastique (23) étant pourvue de la partie supérieure, la partie supérieure s'étendant hors du logement.

3. Boîtier (21) selon la revendication 2, dans lequel l'ensemble élastique (20) comprend en outre un élément élastique (22) reçu dans le boîtier, la tige élastique (23) est fixée à l'élément élastique (22).

4. Bo tier (21) selon la revendication 3, dans lequel l'ensemble élastique (20) comprend en outre un élément de blocage (32) à une extrémité de la tige élastique (23) adjacente à l'élément élastique, l'élément de blocage (32) est configuré pour limiter la tige élastique (23) à l'intérieur du logement.

5. Boîtier (21) selon la revendication 1, dans lequel la tige élastique (23) et l'élément de blocage (32) sont moulés d'un seul tenant.

6. Bo tier (21) selon la revendication 1, dans lequel la partie supérieure a une surface sphérique.

7. Boîtier (21) selon la revendication 1, dans lequel l'autre extrémité du couvercle (40) est sélectivement fixée au corps principal (10) ou libérée du corps principal (10).

8. Ensemble de batterie, comprenant :
une batterie, et
un bo tier (21) selon l'une quelconque des revendications 1 à 7, le bo tier étant configuré pour recevoir la batterie.

9. Cigarette électronique, comprenant :
un boîtier (21) selon l'une quelconque des revendications 1 à 7 ; et
un atomiseur couplé à l'étui (21).

10. Cigarette électronique selon la revendication 9, dans laquelle l'ensemble élastique (20) comprend :
un logement ; et
une tige élastique (23) fixée dans le logement, la tige élastique (23) étant munie de la partie supérieure, la partie supérieure s'étendant hors du logement.

11. Cigarette électronique selon la revendication 10, dans laquelle l'ensemble élastique (20) comprend en outre un élément élastique (22) reçu dans le logement, la tige élastique (23) est fixée à l'élément élastique (22).

12. Cigarette électronique selon la revendication 11, dans laquelle l'ensemble élastique (20) comprend en outre un élément de blocage (32) à une extrémité de la tige élastique (23) adjacente à l'élément élastique, la tige élastique (23) est configurée pour limiter la tige élastique (23) à l'intérieur du logement.

13. Cigarette électronique selon la revendication 12, dans laquelle la tige élastique (23) et l'élément de blocage (32) sont moulés d'un seul tenant.

14. Cigarette électronique selon la revendication 9, dans laquelle la partie supérieure a une surface sphérique.

15. Cigarette électronique selon la revendication 9, dans laquelle l'autre extrémité du couvercle (40) est sélectivement fixée au corps principal (10) ou libérée du corps principal (10).
